# EUROPÄISCHE PATENTSCHRIFT

(11) **EP 4 429 901 B1**
(45) Veröffentlichungstag und Bekanntmachung des Hinweises auf die Patenterteilung: **05.11.2025**
(21) Anmeldenummer: 22772418.4
(22) Anmeldetag: 06.09.2022
(51) Int. Cl.: B60C 13/00

(54) **FAHRZEUGLUFTREIFEN**
PNEUMATIC VEHICLE TIRE
PNEUMATIQUE DE VÉHICULE

(30) Priorität: 08.11.2021 DE 102021212508
(43) Veröffentlichungstag der Anmeldung: 18.09.2024
(73) Patentinhaber: Continental Reifen Deutschland GmbH, 30175 Hannover (DE)
(72) Erfinder: RITTWEGER, Stefan, 30175 Hannover (DE); JURCO, Juraj, 30175 Hannover (DE)
(74) Vertreter: Continental Corporation
(86) Internationale Anmeldenummer: PCT/DE2022/200206
(87) Internationale Veröffentlichungsnummer: WO 2023/078512

(56) Entgegenhaltungen:
- WO-A1-2019/174348
- WO-A1-2020/239307
- WO-A1-2022/117164
- DE-A1- 102019 219 311

## Beschreibung

Die Erfindung betrifft einen Fahrzeugluftreifen mit zumindest einem auf seiner Außenfläche ausgebildeten Flächenelement mit einer gegenüber einem Basisniveau ausgebildeten, flächendeckenden Berg- und Talkontraststruktur.

Es ist bekannt, auf der Außenfläche von Fahrzeugluftreifen, insbesondere auf Seitenwänden, Flächenelemente mit einer Kontraststruktur auszubilden, welche vorrangig die Aufgabe haben, einen Kontrast zu anderen, insbesondere zu unstrukturierten, Flächenbereichen zu schaffen, um derart beispielsweise die Erkennbarkeit von auf den Seitenwänden befindlichen Zeichen, etwa von Designelementen oder Logos, zu verbessern. Flächenelemente mit Kontraststrukturen ermöglichen dies, indem sie - im Vergleich zu glatten Flächen - weniger Licht reflektieren, auftreffendes Licht also "einfangen" und für den Betrachter daher dunkler als glatte Flächenbereiche erscheinen.

Reifen mit einer Kontraststruktur sind beispielsweise bekannt aus der DE 102019219311 A1, WO 2019174348 A1, WO 2020239307 A1 und WO 2022117164 A1.

Aktuell sind auf Reifen vor allem gleichmäßige Kontraststrukturen aus einer Vielzahl von parallel zueinander verlaufenden Rippen vorzufinden, welche Licht unter bestimmen Betrachtungswinkeln verstärkt und unter bestimmten anderen Betrachtungswinkeln wenig bis kaum reflektieren, sodass die Kontrastwirkung nicht optimal ist. Ferner ist bei gleichmäßigen Kontraststrukturen für eine gute Kontrastwirkung die Orientierung der Rippen auf die Gestaltung des jeweilige Flächenelementes abzustimmen.

Neben den gleichmäßigen Kontraststrukturen sind zunehmend auch ungleichmäßige Berg- und Talkontraststrukturen, welche gegenüber den Rippen "feinere" Strukturen, also deutlich kleiner dimensionierte, zipfelförmige Erhebungen und/oder lochförmige Vertiefungen aufweisen, bekannt. Diese werden insbesondere durch Lasergravieren in die Formteile der Reifenheizformen eingebracht und bei der Vulkanisation des Reifens auf diesem eingeprägt.

Ein Fahrzeugluftreifen der eingangs genannten Art ist beispielsweise aus der WO 2020 239 305 A1 bekannt. Der Reifen weist auf seiner Außenfläche zumindest ein Flächenelement mit einer flächendeckenden, über ihre gesamte Erstreckung ungleichmäßigen Berg- und Talkontraststruktur mit einem flächenbezogenen Rauheitswert Sₐ nach EN ISO 25178 von 50 µm bis 150 µm und einer gegenüber dem Basisniveau an ihrer bzw. an ihren höchsten Stelle(n) ermittelten Höhe von 400 µm bis 500 µm auf. Die ungleichmäßige Berg- und Talkontraststruktur fängt Licht auf eine für die Kontrastwirkung zu glatten Flächenbereichen vorteilhaften Weise ein.

Ein weiterer Reifen der eingangs genannter Art ist aus der FR 3 075 099 A1 bekannt. Der Reifen weist einen Laufstreifen und Seitenwände auf, wobei auf dem Laufstreifen und/oder auf zumindest einer Seitenwand zumindest ein Flächenelement mit einer flächendeckenden, ungleichmäßigen Berg- und Talkontraststruktur ausgebildet ist. Die Berg- und Talkontraststruktur weist eine Vielzahl von Bergspitzen auf, welche in unregelmäßiger Weise in einer Dichte von zumindest einer Bergspitze pro Quadratmillimeter und von höchstens einhundert Bergspitzen pro Quadratmillimeter vorzufinden sind. Die Berg- und Talkontraststruktur weist im Bereich der Bergspitzen eine maximale Höhe von 50 µm bis 600 µm, vorzugsweise von 100 µm bis 400 µm, und besonders bevorzugt von 200 µm bis 350 µm auf. Diese Kontraststruktur soll eine gute Kontrastwirkung unabhängig vom Betrachtungswinkel ermöglichen.

Ungleichmäßige Berg- und Talkontraststrukturen sind gleichmäßigen Kontraststrukturen, bedingt durch die weitgehend richtungsunabhängige Lichtreflexion, in ihrer Kontrastwirkung überlegen und darüber hinaus deutlich flexibler einsetzbar, da die Orientierung der Berg- und Talkontraststruktur - im Gegensatz zu Rippen aufweisenden, gleichmäßigen Kontraststrukturen - keine oder zumindest eine untergeordnete Rolle für die Kontrastwirkung spielt. Das Erzeugen von komplett ungleichmäßigen Kontraststrukturen auf großen Flächenbereichen, wie es beispielsweise auf den Seitenwänden von Reifen wünschenswert bzw. erforderlich ist, ist jedoch nur mit sehr aufwändig zu erstellenden Lasergravuren möglich.

Der Erfindung liegt daher die Aufgabe zugrunde, bei einem Reifen der eingangs genannten Art eine in ihrer Größe einfach skalierbare Kontraststruktur mit einer zumindest weitgehend richtungsunabhängigen Kontrastwirkung zur Verfügung zu stellen.

Gelöst wird die gestellte Aufgabe erfindungsgemäß dadurch,
- dass die Berg- und Talkontraststruktur aus einer Vielzahl von rasterförmig zusammengefügten, in Draufsicht übereinstimmende Gestalt aufweisenden Kontraststrukturzellen gebildet ist,
- wobei die Berg- und Talkontraststruktur entlang der gegenseitigen Anschlussstellen der Kontraststrukturzellen die Rasterung definierende Täler aufweist,
- wobei die Kontraststrukturzellen jeweils eine flächendeckende, bis zu den die Rasterung definierenden Tälern reichende, ungleichmäßige Berg- und Talstruktur aufweisen, welche ausschließlich aus einer einzigen zusammenhängenden, verzweigten Bergstruktur und von den die Rasterung definierenden Tälern ausgehenden, geschlossen endenden Tälern gebildet ist,
- wobei die Anordnung der Kontraststrukturzellen und die Ausführung der ungleichmäßigen Berg- und Talstrukturen derart ist, dass die ungleichmäßigen Berg- und Talstrukturen, in Draufsicht betrachtet, durch Kongruenzabbildung ineinander überführbar sind.

Durch die Wiederholung (Vervielfältigung) von derartigen Kontraststrukturzellen ist die Kontraststruktur in ihrer Größe beliebig skalierbar und daher hervorragend für Flächenbereiche unterschiedlicher Größe geeignet. Insbesondere lassen sich, beispielsweise auf den Seitenwänden von Fahrzeugreifen, großflächige Flächenelemente mit einer die Vorteile einer komplett ungleichmäßigen Struktur aufweisenden Kontraststruktur auf einfache Weise zur Verfügung stellen. Die ungleichmäßige Berg- und Talstrukturen sind jeweils ausschließlich aus einer einzigen zusammenhängen Bergstruktur und aus jeweils von einem "Talraster" ausgehenden, geschlossen endenden Tälern gebildet, wodurch eine richtungsunabhängig und besonders stark ausgeprägte Kontrastwirkung erzielt wird. Die Wiederholung ist höchstens auf sehr kurze Distanz erkennbar. Die besonders stark ausgeprägte Kontrastwirkung ist auch dadurch begründet, dass sich die ungleichmäßige Berg- und Talstruktur im Zuge der Vulkanisation in einem zumindest im Wesentlichen tadellosen Zustand ausformen lässt, wie nachfolgend erläutert wird. Die Ausbildung der Kontraststruktur erfolgt insbesondere durch eine Vulkanisationsform mit einem bzw. mehreren an der Innenseite entsprechend lasergravierten Formteile(n). Bedingt durch die zusammenhängende Bergstruktur weist die Lasergravur ausschließlich eine einzige die Bergstruktur ausbildende, gelaserte ungleichmäßige "Kerbenstruktur" auf. In einer solchen Kerbenstruktur lässt sich die entsprechende Kautschukmischung im Zuge der Vulkanisation sehr gut einformen, sodass sich die Kerbenstruktur vollständig bzw. im Wesentlichen vollständig mit Kautschukmischung füllt. In der Folge werden Lufteinschlüsse vermieden und die Vulkanisationsform lässt sich im Bereich der Lasergravur vollständig bzw. im Wesentlichen vollständig entlüften, sodass die ungleichmäßige Berg- und Talstruktur in tadellosem Zustand ausgeformt wird.

Gemäß einer ersten bevorzugten Ausführung weist die Bergstruktur ausschließlich Kreuzungsstellen auf, an welchen jeweils aus drei Richtungen kommend Abschnitte der Bergstruktur aneinander anschließen. Dies ermöglicht eine besonders klar strukturierte, einfach und daher in hoher Qualität herstellbare Bergstruktur.

Bei der ersten bevorzugten Ausführung ist es von Vorteil, wenn die Kreuzungsstellen in Draufsicht T- oder Y-förmig sind. Dies trägt zu einer besonders klaren (eindeutigen) Bergstruktur bei, wodurch sich die Kontrastwirkung, insbesondere auch bei großflächigem Einsatz der Kontraststruktur, beispielsweise auf Seitenwänden, verbessern lässt.

Im Zusammenhang mit der ersten bevorzugten Ausführung ist es ferner von Vorteil, wenn die Bergstruktur drei bis sieben Kreuzungsstellen aufweist. Insbesondere ist eine solche Bergstruktur in ihrer Komplexität derart, dass sie sich in qualitativ hervorragendem Zustand ausformen lässt und gleichzeitig eine sehr hohe Kontrastwirkung zeigt.

Gemäß einer weiteren bevorzugten Ausführung ist die Kontraststrukturzelle in Draufsicht jeweils von einer Anzahl gerader Rasterlinien bzw. einer Anzahl von geraden Abschnitten von Rasterlinien begrenzt, wobei die Rasterlinien bzw. die Abschnitte der Rasterlinien in den die Rasterung definierenden Täler verlaufen und wobei die Kontraststrukturzellen vorzugsweise jeweils eine auf eine angrenzende Rasterlinie bzw. einen angrenzenden Abschnitt einer Rasterlinie bezogene Kantenlänge von 700,0 µm bis 1300,0 µm, insbesondere von 800,0 µm bis 1200,0 µm, aufweisen.

Dies trägt dazu bei, dass die Kontraststruktur in Ihrer Größe sehr einfach skalierbar ist.

Eine weitere bevorzugte Ausführung ist dadurch gekennzeichnet, dass die geschlossen endenden Täler jeweils von einem einzigen die Rasterung mitdefinierenden Tal ausgehen. Dadurch lassen sich die Täler in einer einfachen und die Kontrastwirkung verbessernden Weise auslegen, insbesondere im Hinblick auf eine richtungsunabhängige Kontrastwirkung.

Eine weitere bevorzugte Ausführung ist dadurch gekennzeichnet, dass die Berg- und Talstruktur mit einem sich über die Kontraststrukturzelle erstreckenden Höhenflächenbereich einer Höhenfläche, welche sich parallel zum Basisniveau erstreckt und gegenüber diesem in einer Höhe von 20% der senkrecht zum Basisniveau ermittelten maximalen Höhe der Bergstruktur liegt, eine einteilige Schnittfläche aufweist, welche 70% bis 80% des Höhenflächenbereiches einnimmt.

Gemäß einer bevorzugten Variante der zuletzt genannten bevorzugten Ausführung ist vorgesehen, dass die geschlossen endenden Täler im Höhenflächenbereich jeweils eine an die einteilige Schnittfläche angrenzende Talfläche aufweisen, welche zu jenem die Rasterung mitdefinierendem Tal, von welchem das jeweilige geschlossen endende Tal ausgeht, durch eine Rasterparallellinie mitbegrenzt ist, welche sich durch kleinstmögliche Parallelverschiebung jener Rasterlinie ergibt, welche im die Rasterung mitdefinierendem Tal, von welchem das jeweilige geschlossen endende Tal ausgeht, verläuft, wobei die Größe der größten Talfläche 105% bis 170%, insbesondere höchstens 150%, bevorzugt höchstens 130% der Größe der kleinsten Talfläche beträgt. Die Größe der Talflächen weichen daher nur in begrenztem Ausmaß voneinander ab, sodass die Berg- und Talstruktur in dieser Hinsicht eine gewisse Gleichmäßigkeit aufweist, wodurch die Kontrastwirkung im Hinblick auf ihre Richtungsunabhängigkeit weiter verbessert ist.

Bei der zuletzt erwähnten bevorzugten Variante ist es bevorzugt, wenn die Talflächen zueinander kleinstmögliche gerade gemessene Abstände von 80,0 µm bis 100,0 µm aufweisen.

Eine weitere bevorzugte Ausführung ist dadurch gekennzeichnet, dass die Berg- und Talstruktur mit einem sich über die Kontraststrukturzelle erstreckenden Höhenflächenbereich einer Höhenfläche, welche sich parallel zum Basisniveau erstreckt und gegenüber diesem in einer Höhe von 40% der senkrecht zum Basisniveau ermittelten maximalen Höhe der Bergstruktur liegt, eine einteilige Schnittfläche aufweist, welche 40% bis 60% des Höhenflächenbereiches einnimmt. Die Bergstruktur hängt daher auch noch in dieser Höhe zusammen, was ebenfalls für die Kontrastwirkung von Vorteil ist.

Gemäß einer bevorzugten Variante der zuletzt genannten bevorzugten Ausführung ist vorgesehen, dass die geschlossen endenden Täler im Höhenflächenbereich jeweils eine an die einteilige Schnittfläche angrenzende Talfläche aufweisen, welche zu jenem die Rasterung mitdefinierendem Tal, von welchem das jeweilige geschlossen endende Tal ausgeht, durch eine Rasterparallellinie mitbegrenzt ist, welche sich durch kleinstmögliche Parallelverschiebung jener Rasterlinie ergibt, welche im die Rasterung mitdefinierendem Tal, von welchem das jeweilige geschlossen endende Tal ausgeht, verläuft, wobei die Talflächen zueinander kleinstmögliche gerade gemessene Abstände von 60,0 µm bis 80,0 µm aufweisen.

Gemäß einer weiteren bevorzugten Ausführung ist vorgesehen, dass die Berg- und Talstruktur mit einem sich über die Kontraststrukturzelle erstreckenden Höhenflächenbereich einer Höhenfläche, welche sich parallel zum Basisniveau erstreckt und gegenüber diesem in einer Höhe von 60% der senkrecht zum Basisniveau ermittelten maximalen Höhe der Bergstruktur liegt, eine einteilige Schnittfläche aufweist, welche 20% bis 30% des Höhenflächenbereiches einnimmt. Die Bergstruktur hängt daher auch noch in dieser Höhe zusammen, was ebenfalls für die Kontrastwirkung von Vorteil ist.

Gemäß einer bevorzugten Variante der zuletzt genannten bevorzugten Ausführung ist vorgesehen, dass die geschlossen endenden Täler im Höhenflächenbereich jeweils eine an die einteilige Schnittfläche angrenzende Talfläche aufweisen, welche zu jenem die Rasterung mitdefinierendem Tal, von welchem das jeweilige geschlossen endende Tal ausgeht, durch eine Rasterparallellinie mitbegrenzt ist, welche sich durch kleinstmögliche Parallelverschiebung jener Rasterlinie ergibt, welche im die Rasterung mitdefinierendem Tal, von welchem das jeweilige geschlossen endende Tal ausgeht, verläuft, wobei die Talflächen zueinander kleinstmögliche gerade gemessene Abstände von 40,0 µm bis 50,0 µm aufweisen.

Bevorzugt weist die Bergstruktur eine gegenüber dem und senkrecht zum Basisniveau ermittelte maximale Höhe von 200,0 µm bis 400,0 µm auf.

Gemäß einer weiteren bevorzugten Ausführung weist die Berg- und Talstruktur zumindest zwei, insbesondere zumindest drei, von den die Rasterung definierenden Tälern ausgehende, geschlossen endende Täler auf. Dies trägt vor allem zur weiteren Verbesserung der richtungsunabhängigen Kontrastwirkung bei.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine schematische Draufsicht auf einen Umfangsabschnitt einer Seitenwand eines Fahrzeugluftreifens mit einer Ausführungsvariante der Erfindung,
Fig. 2 eine schematische, vergrößerte Draufsicht auf einen Teilbereich eines auf der Seitenwand ausgebildeten Flächenelementes,
Fig. 3 eine weiter vergrößerte, schematische Schrägansicht einer zum Flächenelement aus Fig. 2 gehörenden Kontraststrukturzelle mit einer Berg- und Talstruktur,
Fig. 4 eine bearbeitete Mikroskopaufnahme, welche eine Draufsicht auf die Kontraststrukturzelle aus Fig. 3 zeigt, wobei die Berg- und Talstruktur entlang einer Höhenfläche F₁ (Fig. 3) geschnitten ist,
Fig. 5 eine Mikroskopaufnahme analog zu jener aus Fig. 4, wobei die Berg- und Talstruktur entlang einer Höhenfläche F₂ (Fig. 3) geschnitten ist,
Fig. 6 eine Mikroskopaufnahme analog zu jener aus Fig. 4, wobei die Berg- und Talstruktur entlang einer Höhenfläche F₃ (Fig. 3) geschnitten ist und
Fig. 7 eine Mikroskopaufnahme analog zu jener aus Fig. 4, wobei die Berg- und Talstruktur entlang einer Höhenfläche F₄ (Fig. 3) geschnitten ist.

Die Erfindung befasst sich mit auf der Außenfläche eines Fahrzeugluftreifens ausgebildeten Flächenelementen. Es ist zumindest ein derartiges Flächenelement auf der Außenfläche ausgebildet.

Die Flächenelemente können auf der Außenfläche in einem Bereich ausgebildet sein, welcher beim Einsatz des Fahrzeugluftreifens mit dem Untergrund nicht bzw. nicht flächig in Kontakt kommt, insbesondere auf einer Seitenwand, am Laufstreifenauslauf, also an den außerhalb der Bodenaufstandsfläche zu den Seitenwänden verlaufenden Schulterflanken, oder auf Rillenflanken und/oder Rillengründen von im Laufstreifen verlaufenden Rillen. Besonders bevorzugt sind die Flächenelemente auf den Seitenwänden ausgebildet. Seitenwände enthalten üblicherweise Zeichen, welche die vorgeschriebenen Angaben, wie Dimensionsangaben, den Speedindex, den Hersteller oder den Verwendungszweck (z.B. Sommer-/ Winterreifen) wiedergeben, oder sonstige Zeichen, wie Logos oder Designelemente. Die Flächenelemente können die erwähnten Zeichen auf der Seitenwand umgeben und/oder die Zeichen selbst bilden.

Die Flächenelemente können ferner auf der Lauffläche ausgebildet sein, also auf jenem Bereich der Außenfläche des Fahrzeugluftreifens, welcher bei dessen Einsatz mit dem Untergrund in Kontakt tritt.

Die Flächenelemente weisen jeweils eine spezielle Berg- und Talkontraststruktur auf und werden bevorzugt im Zuge der Vulkanisation des Fahrzeugluftreifens ausgeformt. Das bzw. die Formsegment(e) der Vulkanisationsform, beispielsweise die Seitenschalen, ist bzw. sind jeweils mit einer mit der Berg- und Talkontraststruktur des Flächenelementes korrespondieren Lasergravur versehen. Alternativ kann die Berg- und Talkontraststruktur am fertig vulkanisierten Reifen mit Laser eingraviert werden.

Die Berg- und Talkontraststruktur ist auf und gegenüber einem Basisniveau N_{B} gebildet und umfasst sich vom Basisniveau N_{B} erhebendes Gummimaterial.

Ist beispielsweise eine Seitenschale mit einer Lasergravur versehen, ist das Basisniveau N_{B} das Niveau der Außenfläche der Seitenwand. Ist etwa eine auf der Seitenschale ausgebildete Erhebung mit einer Lasergravur versehen, ist das Basisniveau N_{B} das Niveau des Bodens einer auf der Seitenwand ausgebildeten, mit der Erhebung korrespondierenden, flachen Vertiefung, sodass das Basisniveau N_{B} gegenüber dem nicht gravierten Niveau, welches das Basisniveau N_{B} umgibt, in Richtung Reifeninneres versetzt ist.

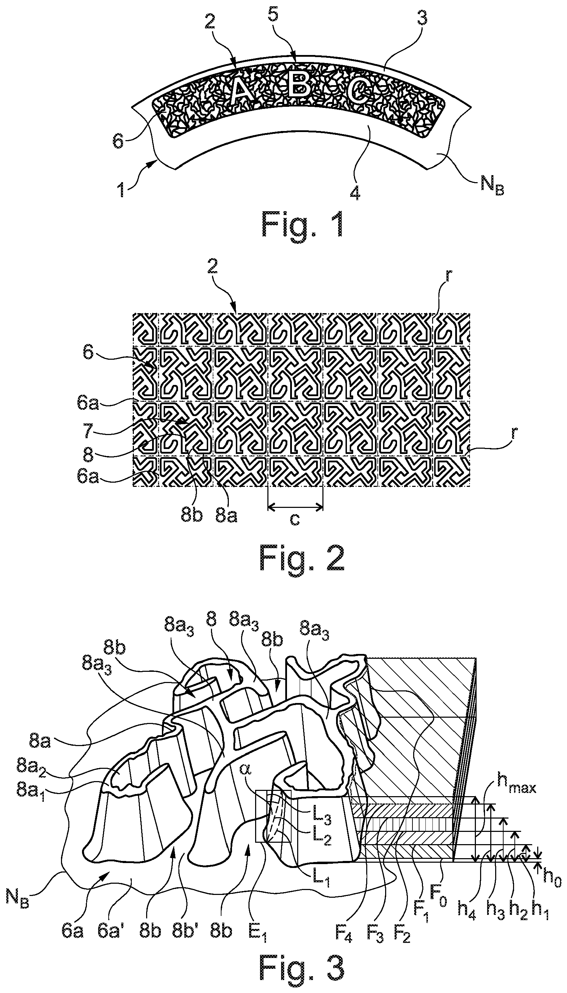

Fig. 1 zeigt schematisch eine in die Ebene projizierte Darstellung eines Umfangsabschnittes einer Seitenwand 1 mit einem Flächenelement 2, welches im Wesentlichen die Form eines Abschnittes eines Kreisringes aufweist. Zusätzlich sind ein Laufstreifenauslauf 3 und ein äußerer Wulstbereich 4, welcher bei auf einer Felge montiertem Reifen durch die Felge zumindest teilweise abgedeckt ist, angedeutet. Das Flächenelement 2 umgibt einen Schriftzug 5, dessen Buchstaben A B C eine glatte Oberfläche aufweisen. Der Schriftzug 5 ist somit nicht Bestandteil des Flächenelementes 2. Beim Ausführungsbeispiel ist das Basisniveau N_{B} das Niveau der Seitenwand 1, also das Niveau der Außenfläche der Seitenwand 1.

Fig. 2 zeigt eine schematische, vergrößerte Draufsicht auf einen rechteckigen Ausschnitt des Flächenelementes 2 im Bereich außerhalb des Schriftzuges 5, wobei ein Quadratraster (Quadratgitter) mit Rasterlinien r eingezeichnet ist. Das Flächenelement 2 ist flächendeckend, also über seine gesamte Erstreckung, mit einer Berg- und Talkontraststruktur 6 versehen (vergl. Fig. 1), welche dem Flächenelement 2 eine Rauheit, also eine Unebenheit, verleiht. Wie durch den Quadratraster angedeutet ist, setzt sich die Berg- und Talkontraststruktur 6 aus einer Vielzahl von im Wesentlichen übereinstimmend ausgeführten, beim Ausführungsbeispiel in Draufsicht bezogen auf ihren äußeren Umfang quadratischen und schachbrettartig aneinander anschließenden Kontraststrukturzellen 7 zusammen. Die Kontraststrukturzellen 7 weisen eine auf einen angrenzenden Abschnitt einer Rasterlinie r bezogene Kantenlänge c von 700,0 µm bis 1300,0 µm, insbesondere von 800,0 µm bis 1200,0 µm, beim Ausführungsbeispiel von 900,0 µm, auf. Auf die genau Lage- bzw. den genauen Verlauf der Rasterlinien r wird noch genauer eingegangen.

Wie ebenfalls noch genauer erläutert wird, weist jede Kontraststrukturzelle 7 eine ungleichmäßige Berg- und Talstruktur 8 (vergl. Fig. 3) auf, wobei die Berg- und Talstrukturen 8 - entsprechend der im Wesentlichen übereinstimmend ausgeführten Kontraststrukturzellen 7 - ebenfalls im Wesentlichen übereinstimmend ausgeführt sind.

Unter "im Wesentlichen übereinstimmend ausgeführten Kontraststrukturzellen 7" bzw. "im Wesentlichen übereinstimmend ausgeführten Berg- und Talstrukturen 8" werden zum einen jeweils solche verstanden, welche unmittelbar auf der Außenfläche des Reifens (im Ausführungsbeispiel auf der Seitenwand) mittels eines softwaregesteuerten Lasers als "überstimmend" erzeugt wurden. Zum anderen werden unter "im Wesentlichen übereinstimmend ausgeführten Kontraststrukturzellen 7" bzw. "im Wesentlichen übereinstimmend ausgeführten Berg- und Talstrukturen 8" solche verstanden, welche im Zuge der Vulkanisation von einer auf der Innenseite des Formsegmentes (im Ausführungsbeispiel der Seitenschale) befindlichen, korrespondieren Lasergravur erzeugt wurden, wobei die Lasergravur eine Vielzahl von aneinander anschließenden Gravurbereichen, welche jeweils mittels eines softwaregesteuerten Lasers als "übereinstimmend" erzeugt wurden, umfasst. Bedingt durch die beim Lasergravieren auftretenden Schmelz- und Verdampfungsprozesse lassen sich mit den aktuell zur Verfügung stehenden Methoden an der Außenfläche von Fahrzeugluftreifen keine identischen (100% übereinstimmenden) Kontraststrukturzellen 7, also keine identischen Berg- und Talstrukturen 8, erzeugen. Dies gilt sowohl für indirekt durch Lasergravieren der Formteile erzeugte Flächenelemente 2 als auch für direkt durch Lasergravieren des vulkanisierten Gummimaterials erzeugte Flächenelemente 2. "Im Wesentlichen übereinstimmend" bezeichnet daher innerhalb der technischen Toleranzgrenzen des Herstellungsverfahrens (softwaregesteuerte Lasergravur) auftretende Abweichungen.

Wie Fig. 2 ferner zeigt, weist die Berg- und Talkontraststruktur 6 die Rasterlinien r entlangverlaufende, einander kreuzende Täler 6a auf, welche miteinander einen gitterförmigen, vorzugsweise mit freiem Auge erkennbaren, Talraster bilden.

Die ungleichmäßige Berg- und Talstruktur 8 jeder Kontraststrukturzelle 7 ist von den jeweiligen Abschnitten der Täler 6a des gitterförmigen Talrasters in quadratischer Form umlaufen, wobei sich innerhalb jeder Kontraststrukturzelle 7 die an die jeweiligen Rasterlinien r angrenzenden Teilbereich der entsprechenden vier Täler 6a befinden. Die ungleichmäßige Berg- und Talstruktur 8 ist derart flächendeckend innerhalb der zugehörigen Kontraststrukturzelle 7 ausgebildet, dass die Berg- und Talstruktur 8 bis zu den Teilbereichen der jeweiligen vier Täler 6a reicht, an diese Teilbereiche daher flächig angrenzt. Auf die genaue Bedeutung des Ausdruckes "flächendeckende Berg- und Talstruktur 8" wird noch genauer eingegangen.

Die Anordnung der Kontraststrukturzellen 7 und die Ausführung der ungleichmäßigen Berg- und Talstrukturen 8 sind derart, dass die ungleichmäßigen Berg- und Talstrukturen 8, in Draufsicht betrachtet, durch (verdrehungsfreie) Parallelverschiebung ineinander überführbar sind.

Die weitere Ausgestaltung der Kontraststrukturzellen 7 wird nachfolgend anhand einer einzelnen Kontraststrukturzelle 7 erläutert.

Fig. 3 zeigt eine schematische, vereinfachte Schrägansicht auf eine in idealisierter Form dargestellte, ungleichmäßige Berg- und Talstruktur 8 einer Kontraststrukturzelle 7. Die Berg- und Talstruktur 8 ist von einer einzigen, zusammenhängenden, ungleichmäßigen, mehrfach verzweigten Bergstruktur 8a sowie von einer Anzahl von Tälern 8b, welche von den die Berg- und Talstruktur 8 umlaufenden Tälern 6a des Talrasters ausgehen und im "Inneren" der Bergstruktur 8a geschlossen enden (vergl. Fig. 2), gebildet. Die Täler 8b sind also als "Sackgassen" ausgeführt. Es sind somit keine von Abschnitten der Bergstruktur 8a umlaufene (umschlossene) Talkessel (Talbecken) vorhanden.

Die Bergstruktur 8a weist eine Anzahl von in Draufsicht T- bzw. Y-förmigen Kreuzungsstellen 8a₃ auf, wobei die Kreuzungsstellen 8a₃ die einzigen Kreuzungsstellen der Bergstruktur 8a sind. Insbesondere weist die Bergstruktur 8a drei bis sieben, im Ausführungsbeispiel fünf, T- bzw. Y-förmige Kreuzungsstellen 8a₃ auf. Die Bergstruktur 8a weist ferner eine gegenüber dem und senkrecht zum Basisniveau N_{B} ermittelte maximale Höhe hₘₐₓ (Höhe an der bzw. den höchsten Stelle(n)) von 200,0 µm bis 400,0 µm, beim Ausführungsbeispiel von 280,0 µm, auf.

Die Bergstruktur 8a weist einen einzigen Bergsattel 8a₁ und eine Anzahl von Bergflanken 8a₂ auf, wobei die Bergflanken 8a₂ vom Bergsattel 8a₁ ausgehen, zum Basisniveau N_{B} verlaufen und an den freien Enden der Bergstruktur 8a diese umlaufend zusammenlaufen.

Die Bergflanken 8a₂ sind ungleichmäßig gekrümmte Flächen, welche vorzugsweise frei von Knickstellen sind, wobei die Neigung der Flächen relativ zum Basisniveau N_{B} mit zunehmender Entfernung vom Basisniveau N_{B} zunimmt. Die Zunahme der Neigung der Bergflanken 8a₂ erfolgt dabei insbesondere auf eine progressive Art, sodass die Zunahme der Neigung auf eine beschleunigte Weise und somit ausgehend vom Basisniveau N_{B} zunächst nur auf geringe und anschließend auf immer stärkere Weise erfolgt. In Fig. 3 ist exemplarisch eine senkrecht auf das Basisniveau N_{B} stehende Schnittebene E₁ im Bereich einer Bergflanke 8a₂ eingezeichnet. Die Schnittebene E₁ weist mit der betreffenden Bergflanke 8a₂ eine gekrümmte Schnittlinie L₁ auf, welche insbesondere ausschließlich in eine Richtung gekrümmt ist und daher bogenförmig verläuft. Die Bergflanke 8a₂ verläuft derart, dass eine die Enden der Schnittlinie L₁ verbindende gerade Hilfslinie L₂ mit einer senkrecht auf das Basisniveau N_{B} stehenden, die Hilfslinie L₂ schneidenden Bezugslinie L₃ einen Winkel α von 8° bis 20° einschließt. Im Bereich der Bergflanken 8a₂ können eine Vielzahl von Schnittebenen E₁ gelegt werden, welche zu einem die Neigung der Bergflanken 8a₂ definierendem Winkel α von 8° bis 20° führen.

Bevorzugter Weise gehen von zumindest zwei, insbesondere von zumindest drei, der vier Täler 6a jeweils zumindest eines der geschlossen endenden Täler 8b aus. Bei der gezeigten Berg- und Talstruktur 8 gehen von dem in Fig. 3 die Bergstruktur 8a "vorne" begrenzendem Tal 6a zwei Täler 8b, von dem in Fig. 3 die Bergstruktur 8a "hinten" begrenzendem Tal 6a ein einziges Tal 8b, von dem in Fig. 3 die Bergstruktur 8a "an der linken Seite" begrenzendem Tal 6a ebenfalls ein einziges Tal 8b und von dem in Fig. 3 die die Bergstruktur 8a "an der rechten Seite" begrenzendem Tal 6a kein Tal 8b aus. Wie insbesondere Fig. 2 zeigt, sind die Täler 8b, in Draufsicht betrachtet, ausgehend vom ihrem am jeweiligen Tal 6a liegenden Ende ungleichmäßig langgezogene und ggf. verzweigte Negative.

Die bereits erwähnte, idealisierte Form der dargestellten ungleichmäßigen Berg- und Talstruktur 8 kennzeichnet sich dadurch, dass der Bergsattel 8a₁ ein ebenes Plateau ist und jedes Tal 6a, 8b einen am Basisniveau N_{B} verlaufenden Talboden 6a' (Tal 6a), 8b' (Tal 8b) aufweist. Bedingt durch die erwähnten Schmelzprozesse beim Lasergravieren weist jedoch sowohl der Bergsattel 8a₁ als auch jeder Talboden 6a', 8b' eine gewisse ungleichmäßige Rauheit auf, sodass sowohl das gezeigte ebene Plateau des Bergsattels 8a₁ als auch jeder Talboden 6a', 8b' keine ebene Fläche ist, sondern gegenüber dem Basisniveau N_{B} über unterschiedliche Niveaus verläuft bzw. sich auf unterschiedlichen Niveaus befindet. Sowohl das Bergsattel 8a₁ als auch jeder Talboden 6a', 8b' weist somit feine, ungleichmäßige Erhebungen auf (nicht gezeigt). Der Talboden 6a', 8b' verläuft somit im Wesentlichen auf dem Basisniveau N_{B} und der Bergsattel 8a₁ verläuft somit im Wesentlichen auf dem Niveau der maximalen Höhe hₘₐₓ, wobei dieser Ausdruck nachfolgend noch genauer definiert wird.

Die weitere Gestalt der ungleichmäßigen Berg- und Talstruktur 8 wird nachfolgend unter Zuhilfenahme von Höhenflächen F₀, F₁, F₂, F₃, F₄, welche in Fig. 3 seitlich andeutet sind, erläutert. Die Höhenflächen F₀, F₁, F₂, F₃, F₄ erstrecken sich parallel zum Basisniveau N_{B}, schneiden die ungleichmäßige Berg- und Talstruktur 8 und verlaufen auf verschiedenen, senkrecht gegenüber dem Basisniveau N_{B} ermittelten Höhen h₀ (Höhenfläche F₀), h₁ (Höhenfläche F₁), h₂ (Höhenfläche F₂), h₃ (Höhenfläche F₃) und h₄ (Höhenfläche F₄).

Die Höhenfläche F₀ dient zur Definition des Ausdruckes "im Wesentlichen auf dem Basisniveau N_{B} verlaufen", zur Definition der Lage der Rasterlinien r sowie zur Definition des Ausdruckes "flächendeckende Berg- und Talstruktur 8". Die zur Höhenfläche F₀ gehörende Höhe h₀ beträgt 30,0 µm.

Unter einem im Wesentlichen auf dem Basisniveau N_{B} verlaufenden Talboden 6a', 8b' " wird ein solcher verstanden, auf welchem die bereits erwähnten, feinen, unregelmäßigen Erhebungen höchstens bis zur Höhenfläche F₀ reichen, d.h. entweder an der Höhenfläche F₀ oder zwischen dem Basisniveau N_{B} und der Höhenfläche F₀ enden. Das zughörige Tal 6, 8 ist daher ab der dem Basisniveau N_{B} abgewandten Seite der Höhenfläche F₀ frei von feinen, unregelmäßigen Erhebungen.

Die Lage der Rasterlinien r in den Tälern 6a ist derart, dass die jeweilige Rasterlinie r zu den Bergstrukturen 8a der beiden an das jeweilige Tal 6a angrenzenden Kontraststrukturzellen 7, ermittelt in der Höhenfläche F₀, übereinstimmende als kleinstmögliche Abstände ermittelte Abstände aufweist (nicht gezeigt). Diese Abstände betragen bei einer "flächendeckenden (bis zu den die Rasterung definierenden Tälern 6a reichenden) ungleichmäßigen Berg- und Talstruktur 8" 30,0 µm bis 100,0 µm. Diese Abstände definieren im Zusammenhang mit der Berg- und Talstruktur 8 auch den Ausdruck "flächendeckend".

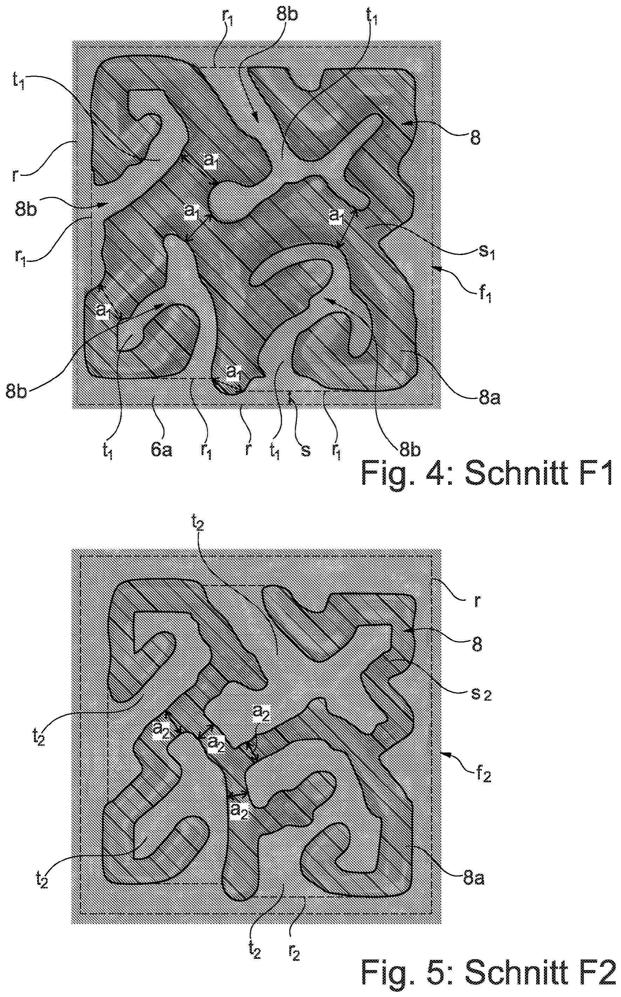

Die Höhe h₁ der Höhenfläche F₁ beträgt 20% der maximalen Höhe hₘₐₓ, die Höhe h₂ der Höhenfläche F₂ beträgt 40% der maximalen Höhe hₘₐₓ, die Höhe h₃ der Höhenfläche F₃ beträgt 60% der maximalen Höhe hₘₐₓ und die Höhe h₄ der Höhenfläche F₄ beträgt 80% der maximalen Höhe hₘₐₓ. Die Höhenflächen F₁, F₂, F₃ und F₄ weisen in jeder Kontraststrukturzelle 7 - übereinstimmend zur Kantenlänge c (Fig. 2) der Kontraststrukturzelle 7 - einen 900 µm * 900 µm großen, in Draufsicht durch die entsprechenden Abschnitte der jeweiligen Rasterlinien r begrenzten Höhenflächenbereich f₁, f₂, f₃, f₄ auf (siehe Fig. 4 bis Fig. 7).

Wie Fig. 4 bis Fig. 7 zeigen, weist die ungleichmäßige Berg- und Talstruktur 8 mit dem zugehörigen Höhenflächenbereich f₁, f₂, f₃, f₄ jeweils eine einteilige (zusammenhängende) bzw. mehrteilige, in den Figuren schraffierte Schnittfläche s₁, s₂, s₃, s₄ auf. Die Schnittfläche s₁, s₂, s₃, s₄ ist somit Bestandteil des zugehörigen Höhenflächenbereiches f₁, f₂, f₃, f₄. Im Bereich jeder Schnittfläche s₁, s₂, s₃, s₄ ist der Höhenflächenbereich f₁, f₂, f₃, f₄ von der Bergstruktur 8a durchragt.

Gemäß Fig. 4 ist die Schnittfläche s₁ einteilig und nimmt 70% bis 80% des Höhenflächenbereiches f₁ ein. Jedes geschlossen endende Tal 8b weist im Höhenflächenbereich f₁ eine Talfläche t₁ auf, welche an die Schnittfläche s₁ angrenzt und zum Tal 6a, von welchem das jeweilige Tal 8a ausgeht, durch eine im Höhenflächenbereich f₁ verlaufende Rasterparallellinie r₁ "geschlossen" wird. Die Talflächen t₁ sind daher Teile des Höhenflächenbereiches f₁. Die Rasterparallellinie r₁ ergibt sich durch kleinstmögliche Parallelverschiebung der Rasterlinie r, welche im Bereich jenes Tales 6a verläuft, von welchem das Tal 8b ausgeht. "Kleinstmögliche Parallelverschiebung" bedeutet, dass die das Ausmaß der Parallelverschiebung definierende, senkrecht zur Rasterlinie r gemessene Strecke s kleinstmöglich ausgeführt ist. Die Größe der größten Talfläche t₁ beträgt 105% bis 170%, insbesondere höchstens 150%, bevorzugt höchstens 130%, der Größe der kleinsten Talfläche t₁. Die zueinander benachbarten Talflächen t₁ weisen zueinander kleinstmögliche gerade gemessene Abstände a₁ von 80,0 µm bis 100,0 µm auf.

Gemäß Fig. 5 ist die Schnittfläche s₂ ebenfalls einteilig, wobei - wie ein Vergleich mit Fig. 4 zeigt - die Schnittfläche s₂ einen Teil der "unter" ihr liegenden Schnittfläche s₁ darstellt und 40% bis 60% des Höhenflächenbereiches f₂ einnimmt. Jedes geschlossen endende Tal 8b weist im Höhenflächenbereich f₂ eine an die Schnittfläche s₂ angrenzende Talfläche t₂ auf, welche zum Tal 6a, von welchem das jeweilige Tal 8b ausgeht, im Höhenflächenbereich f₂ durch eine Rasterparallellinie r₂ begrenzt ist. Die Rasterparallellinien r₂ ergeben sich analog zu den Rasterparallellinien r₁. Die Talflächen t₂ weisen zueinander kleinstmögliche gerade gemessene Abstände a₂ von 60,0µm bis 80,0 µm auf.

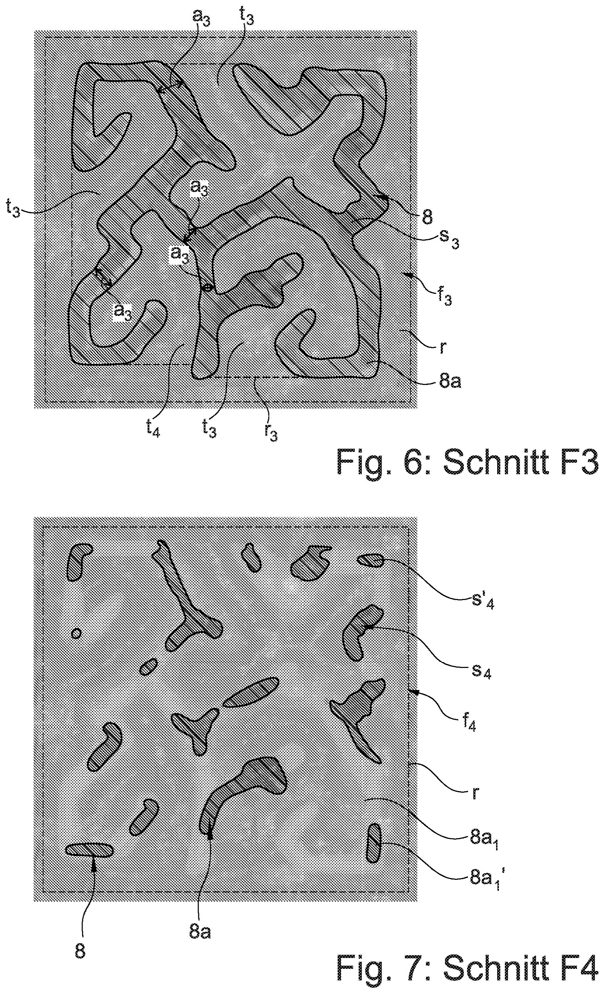

Gemäß Fig. 6 ist auch die Schnittfläche s₃ einteilig, wobei die Schnittfläche s₃ einen Teil der "unter" ihr liegenden Schnittfläche s₂ darstellt und 20% bis 30% des Höhenflächenbereiches f₃ einnimmt. Jedes geschlossen endende Tal 8b weist im Höhenflächenbereich f₃ eine durch eine Rasterparallellinie r₃ mitbegrenzte Talfläche t₃ auf, welche analog zur Talfläche t₁, t₂ ermittelt ist. Die Talflächen t₃ weisen zueinander als kleinstmögliche Abstände ermittelte Abstände a₃ von 40,0 µm bis 50,0 µm auf.

Gemäß Fig. 7 ist die Schnittfläche s₄ mehrteilig, wobei die Schnittfläche s₄ von insbesondere drei bis zwanzig, bevorzugt von dreizehn bis siebzehn, voneinander getrennten Schnittflächenteilen s₄' gebildet ist, einen Teil der "unter" ihr liegenden Schnittfläche s₃ darstellt und 5% bis 15% des Höhenflächenbereiches f₄ einnimmt. Es gilt somit die Beziehung s₄ < s₃ < s₂ < s₁. Bevorzugter Weise gelten die Beziehungen s₄ ≤ 0,7 s₃, s₃ ≤ 0,7 s₂ und s₂ ≤ 0,7 s₁. Der Höhenflächenbereich f₄ trennt somit eine Anzahl von auf den Schnittflächenteilen s₄' aufsitzenden, also an diesen an der dem Basisniveau N_{B} abgewandten Seite angrenzenden, Bergsattelbereichen 8a₁' des Bergsattels 8a₁ von dem "unter" der Höhenfläche F₄ liegenden Bereich der Bergstruktur 8a. Ein Bergsattelbereich 8a₁' ist also ein zusammenhängender Bereich der Bergstruktur 8a.

Die Erfindung ist auf das beschriebene Ausführungsbeispiel nicht beschränkt.

Die Kontraststrukturzellen können in Draufsicht eine von der beschriebenen quadratischen Gestalt abweichende Gestalt aufweisen. Vorzugsweise sind die Kontraststrukturzellen in Draufsicht jeweils von einer Anzahl gerader Rasterlinien bzw. Rasterlinienabschnitten begrenzt. Besonders bevorzugt weisen die Kontraststrukturzellen die Gestalt eines regelmäßigen Polygons auf, insbesondere eines Quadrates oder regelmäßigen Sechseckes. Ferner können die Kontraststrukturzellen insbesondere Rechtecke oder langgezogene Sechsecke sein. Die ungleichmäßigen Berg- und Talstrukturen der Kontraststrukturzellen sind in Draufsicht betrachtet durch zumindest eine Kongruenzabbildung ineinander überführbar. Zu den Kongruenzabbildungen gehören bekannter Weise Spiegelungen (genauer Punktspiegelungen und senkrechte Achsenspiegelungen, nicht jedoch Kreisspiegelungen und Schrägspiegelungen), Drehungen, Parallelverschiebungen (Translationen) und Gleitspiegelungen (Schubspiegelungen). Es können daher Kontraststrukturzellen vorgesehen sein, welche durch das hintereinander Ausführen mehrerer verschiedener Kongruenzabbildungen ineinander überführbar sind. Außerdem können Kontraststrukturzellen vorgesehen sein, welche durch verschiedene und/oder verschiedene Kombinationen von Kongruenzabbildungen ineinander überführbar sind. Beispielsweise könnte eine erste Kontraststrukturzelle durch eine Parallelverschiebung in eine zweite Kontraststrukturzelle und die erste Kontraststrukturzelle durch eine Drehung in eine dritte Kontraststrukturzelle überführbar sein.

### Bezugszeichenliste

- 1: Seitenwand
- 2: Flächenelement
- 3: Laufstreifenauslauf
- 4: Wulstbereich
- 5: Schriftzug
- 6: Berg- und Talkontraststruktur
- 6a: Tal
- 6a': Talboden
- 7: Kontraststrukturzelle
- 8: Berg- und Talstruktur
- 8a: Bergstruktur
- 8a₁: Bergsattel
- 8a₁': Bergsattelbereich
- 8a₂: Bergflanke
- 8a₃: Kreuzungsstelle
- 8b: Tal
- 8b': Talboden
- a₁, a₂, a₃, a₄: Abstand
- c: Kantenlänge
- E₁: Schnittebene
- F₀, F₁, F₂, F₃, F₄: Höhenfläche
- f₁, f₂, f₃, f₄: Höhenflächenbereich
- h₀, h₁, h₂, h₃, h₄: Höhe
- hₘₐₓ: maximale Höhe
- L₁: Schnittlinie
- L₂: Hilfslinie
- L₃: Bezugslinie
- N_{B}: Basisniveau
- r: Rasterlinie
- r₁, r₂, r₃: Rasterparallellinie
- s: Strecke
- s₁, s₂, s₃, s₄: Schnittfläche
- s₄: Schnittflächenteil
- t₁, t₂, t₃: Talfläche
- α: Winkel

## Patentansprüche

1. Fahrzeugluftreifen mit zumindest einem auf seiner Außenfläche ausgebildeten Flächenelement (2) mit einer gegenüber einem Basisniveau (N_{B}) ausgebildeten, flächendeckenden Berg- und Talkontraststruktur (6),
- wobei die Berg- und Talkontraststruktur (6) aus einer Vielzahl von rasterförmig zusammengefügten, in Draufsicht übereinstimmende Gestalt aufweisenden Kontraststrukturzellen (7) gebildet ist,
**dadurch gekennzeichnet,**
- **dass** die Berg- und Talkontraststruktur (6) entlang der gegenseitigen Anschlussstellen der Kontraststrukturzellen (7) die Rasterung definierende Täler (6a) aufweist,
- wobei die Kontraststrukturzellen (7) jeweils eine flächendeckende, bis zu den die Rasterung definierenden Tälern (6a) reichende, ungleichmäßige Berg- und Talstruktur (8) aufweisen, welche ausschließlich aus einer einzigen zusammenhängenden, verzweigten Bergstruktur (8a) und von den die Rasterung definierenden Tälern (6a) ausgehenden, geschlossen endenden Tälern (8b) gebildet ist,
- wobei die Anordnung der Kontraststrukturzellen (7) und die Ausführung der ungleichmäßigen Berg- und Talstrukturen (8) derart ist, dass die ungleichmäßigen Berg- und Talstrukturen (8), in Draufsicht betrachtet, durch Kongruenzabbildung ineinander überführbar sind.

2. Fahrzeugluftreifen nach Anspruch 1, **dadurch gekennzeichnet, dass** die Bergstruktur (8a) ausschließlich Kreuzungsstellen (8a₃) aufweist, an welchen jeweils aus drei Richtungen kommend Abschnitte der Bergstruktur (8a) aneinander anschließen.

3. Fahrzeugluftreifen nach Anspruch 2, **dadurch gekennzeichnet, dass** die Kreuzungsstellen (8a₃) in Draufsicht T- oder Y-förmig sind.

4. Fahrzeugluftreifen nach Anspruch 2 oder 3, **dadurch gekennzeichnet, dass** die Bergstruktur (8a) drei bis sieben der Kreuzungsstellen (8a₃) aufweist.

5. Fahrzeugluftreifen nach einem der Ansprüche 1 bis 4, **dadurch gekennzeichnet, dass** die Kontraststrukturzellen (7) in Draufsicht jeweils von einer Anzahl gerader Rasterlinien (r) bzw. einer Anzahl von geraden Abschnitten von Rasterlinien (r) begrenzt sind, wobei die Rasterlinien (r) bzw. die Abschnitte der Rasterlinien (r) in den die Rasterung definierenden Täler (6a) verlaufen und wobei die Kontraststrukturzellen (7) vorzugsweise jeweils eine auf eine angrenzende Rasterlinie (r) bzw. einen angrenzenden Abschnitt einer Rasterlinie (r) bezogene Kantenlänge (c) von 700,0 µm bis 1300,0 µm, insbesondere von 800,0 µm bis 1200,0 µm, aufweisen.

6. Fahrzeugluftreifen nach einem der Ansprüche 1 bis 5, **dadurch gekennzeichnet, dass** die geschlossen endenden Tälern (8b) jeweils von einem einzigen die Rasterung mitdefinierenden Tal (6a) ausgehen.

7. Fahrzeugluftreifen nach einem der Ansprüche 1 bis 6, **dadurch gekennzeichnet, dass** die Berg- und Talstruktur (8) mit einem sich über die Kontraststrukturzelle (7) erstreckenden Höhenflächenbereich (f₁) einer Höhenfläche (F₁), welche sich parallel zum Basisniveau (N_{B}) erstreckt und gegenüber diesem in einer Höhe (h₁) von 20% der senkrecht zum Basisniveau (N_{B}) ermittelten maximalen Höhe (hₘₐₓ) der Bergstruktur (8a) liegt, eine einteilige Schnittfläche (s₁) aufweist, welche 70% bis 80% des Höhenflächenbereiches (f₁) einnimmt.

8. Fahrzeugluftreifen nach den Ansprüchen 5 bis 7, **dadurch gekennzeichnet, dass** die geschlossen endenden Täler (8b) im Höhenflächenbereich (f₁) jeweils eine an die einteilige Schnittfläche (s₁) angrenzende Talfläche (t₁) aufweisen, welche zu jenem die Rasterung mitdefinierendem Tal (6a), von welchem das jeweilige geschlossen endende Tal (8b) ausgeht, durch eine Rasterparallellinie (r₁) mitbegrenzt ist, welche sich durch kleinstmögliche Parallelverschiebung jener Rasterlinie (r) ergibt, welche im die Rasterung mitdefinierendem Tal (6a), von welchem das jeweilige geschlossen endende Tal (8b) ausgeht, verläuft, wobei die Größe der größten Talfläche (t₁) 105% bis 170%, insbesondere höchstens 150%, bevorzugt höchstens 130% der Größe der kleinsten Talfläche (t₁) beträgt.

9. Fahrzeugluftreifen nach Anspruch 8, **dadurch gekennzeichnet, dass** die Talflächen (t₁) zueinander kleinstmögliche gerade gemessene Abstände (a₁) von 80,0 µm bis 100,0 µm aufweisen.

10. Fahrzeugluftreifen nach einem der Ansprüche 1 bis 9, **dadurch gekennzeichnet, dass** die Berg- und Talstruktur (8) mit einem sich über die Kontraststrukturzelle (7) erstreckenden Höhenflächenbereich (f₂) einer Höhenfläche (F₂), welche sich parallel zum Basisniveau (N_{B}) erstreckt und gegenüber diesem in einer Höhe (h₂) von 40% der senkrecht zum Basisniveau (N_{B}) ermittelten maximalen Höhe (hₘₐₓ) der Bergstruktur (8a) liegt, eine einteilige Schnittfläche (s₂) aufweist, welche 40% bis 60% des Höhenflächenbereiches (f₂) einnimmt.

11. Fahrzeugluftreifen nach den Ansprüchen 5, 6 und 10, **dadurch gekennzeichnet, dass** die geschlossen endenden Täler (8b) im Höhenflächenbereich (f₂) jeweils eine an die einteilige Schnittfläche (s₂) angrenzende Talfläche (t₂) aufweisen, welche zu jenem die Rasterung mitdefinierendem Tal (6a), von welchem das jeweilige geschlossen endende Tal (8b) ausgeht, durch eine Rasterparallellinie (r₂) mitbegrenzt ist, welche sich durch kleinstmögliche Parallelverschiebung jener Rasterlinie (r) ergibt, welche im die Rasterung mitdefinierendem Tal (6a), von welchem das jeweilige geschlossen endende Tal (8b) ausgeht, verläuft, wobei die Talflächen (t₁) zueinander kleinstmögliche gerade gemessene Abstände (a₂) von 60,0 µm bis 80,0 µm aufweisen.

12. Fahrzeugluftreifen nach einem der Ansprüche 1 bis 11, **dadurch gekennzeichnet, dass** die Berg- und Talstruktur (8) mit einem sich über die Kontraststrukturzelle (7) erstreckenden Höhenflächenbereich (f₃) einer Höhenfläche (F₃), welche sich parallel zum Basisniveau (N_{B}) erstreckt und gegenüber diesem in einer Höhe (h₃) von 60% der senkrecht zum Basisniveau (N_{B}) ermittelten maximalen Höhe (hₘₐₓ) der Bergstruktur (8a) liegt, eine einteilige Schnittfläche (s₃) aufweist, welche 20% bis 30% des Höhenflächenbereiches (f₂) einnimmt.

13. Fahrzeugluftreifen nach den Ansprüchen 5, 6 und 12, **dadurch gekennzeichnet, dass** die geschlossen endenden Täler (8b) im Höhenflächenbereich (f₃) jeweils eine an die einteilige Schnittfläche (s₃) angrenzende Talfläche (t₃) aufweisen, welche zu jenem die Rasterung mitdefinierendem Tal (6a), von welchem das jeweilige geschlossen endende Tal (8b) ausgeht, durch eine Rasterparallellinie (r₃) mitbegrenzt ist, welche sich durch kleinstmögliche Parallelverschiebung jener Rasterlinie (r) ergibt, welche im die Rasterung mitdefinierenden Tal (6a), von welchem das jeweilige geschlossen endende Tal (8b) ausgeht, verläuft, wobei die Talflächen (t₃) zueinander kleinstmögliche gerade gemessene Abstände (a₃) von 40,0 µm bis 50,0 µm aufweisen.

14. Fahrzeugluftreifen nach einem der Ansprüche 1 bis 13, **dadurch gekennzeichnet, dass** die Bergstruktur (8a) eine gegenüber dem und senkrecht zum Basisniveau (N_{B}) ermittelte maximale Höhe (hₘₐₓ) von 200,0 µm bis 400,0 µm aufweist.

15. Fahrzeugluftreifen nach einem der Ansprüche 1 bis 14, **dadurch gekennzeichnet, dass** die Berg- und Talstruktur (8) zumindest zwei, insbesondere zumindest drei, von den die Rasterung definierenden Tälern (6a) ausgehende, geschlossen endende Täler (8a) aufweist.

## Claims

1. Pneumatic vehicle tyre comprising at least one surface element (2) formed on its outer surface with a peak-and-trough contrast structure (6) formed relative to a base level (N_{B}) and covering the surface,
- wherein the peak-and-trough contrast structure (6) is formed from a plurality of contrast structure cells (7) joined together in a grid pattern and having matching forms in top view,
**characterized**
- **in that** the peak-and-trough contrast structure (6) has grid-defining troughs (6a) along the mutual connection points of the contrast structure cells (7),
- wherein the contrast structure cells (7) each have an irregular peak-and-trough structure (8) which covers the surface, extends up to the grid-defining troughs (6a) and is made solely of a single cohesive branched peak structure (8a) and closed-ended troughs (8b) projecting from the grid-defining troughs (6a),
- wherein the arrangement of the contrast structure cells (7) and the design of the irregular peak-and-trough structures (8) are such that, viewed from above, the irregular peak-and-trough structures (8) can be transferred into one another by congruent projection.

2. Pneumatic vehicle tyre according to Claim 1, **characterized in that** the peak structure (8a) has exclusively crossing points (8a₃) at which portions of the peak structure (8a) coming from three directions meet one another.

3. Pneumatic vehicle tyre according to Claim 2, **characterized in that** the crossing points (8a₃) are T-shaped or Y-shaped in top view.

4. Pneumatic vehicle tyre according to Claim 2 or 3, **characterized in that** the peak structure (8a) has three to seven crossing points (8a₃).

5. Pneumatic vehicle tyre according to any of Claims 1 to 4, **characterized in that** in top view, the contrast structure cells (7) are each delimited by a number of straight grid lines (r) or a number of straight portions of grid lines (r), wherein the grid lines (r) or portions of grid lines (r) run in the grid-defining troughs (6a) and wherein the contrast structure cells (7) preferably each have an edge length (c) relating to an adjoining grid line (r) or adjoining portion of a grid line (r) of 700.0 µm to 1300.0 µm, in particular 800.0 µm to 1200.0 µm.

6. Pneumatic vehicle tyre according to any of Claims 1 to 5, **characterized in that** the closed-ended troughs (8b) each project from a single grid-codefining trough (6a).

7. Pneumatic vehicle tyre according to any of Claims 1 to 6, **characterized in that** the peak-and-trough structure (8), with a height surface region (f₁) extending over the contrast structure cell (7), of a height surface (F₁) which extends parallel to the base level (N_{B}) and lies relative thereto at a height (h₁) of 20% of the maximum height (hₘₐₓ) of the peak structure (8a) determined perpendicularly to the base level (N_{B}), has a one-piece section surface (s₁) which takes up 70% to 80% of the height surface region (f₁).

8. Pneumatic vehicle tyre according to Claims 5 to 7, **characterized in that** the closed-ended troughs (8b) in the height surface region (f₁) each have a trough surface (t₁) which adjoins the one-piece section surface (s₁) and is co-delimited, against the grid-codefining trough (6a) from which the respective closed-ended trough (8b) projects, by a grid parallel line (r₁) resulting from a minimum possible parallel shift of the grid line (r) which runs in the grid-codefining trough (6a) from which the respective closed-ended trough (8b) projects, wherein the size of the largest trough surface (t₁) amounts to 105% to 170%, in particular maximum 150%, preferably maximum 130% of the size of the smallest trough surface (t₁).

9. Pneumatic vehicle tyre according to Claim 8, **characterized in that** the trough surfaces (t₁) have minimum possible straight measured distances (a₁) from one another of 80.0 µm to 100.0 µm.

10. Pneumatic vehicle tyre according to any of Claims 1 to 9, **characterized in that** the peak-and-trough structure (8), with a height surface region (f₂) extending over the contrast structure cell (7), of a height surface (F₂) which extends parallel to the base level (N_{B}) and lies relative thereto at a height (h₂) of 40% of the maximum height (hₘₐₓ) of the peak structure (8a) determined perpendicularly to the base level (N_{B}), has a one-piece section surface (s₂) which takes up 40% to 60% of the height surface region (f₂).

11. Pneumatic vehicle tyre according to Claims 5, 6 and 10, **characterized in that** the closed-ended troughs (8b) in the height surface region (f₂) each have a trough surface (t₂) which adjoins the one-piece section surface (s₂) and is co-delimited, against the grid-codefining trough (6a) from which the respective closed-ended trough (8b) projects, by a grid parallel line (r₂) resulting from a minimum possible parallel shift of the grid line (r) which runs in the grid-codefining trough (6a) from which the respective closed-ended trough (8b) projects, wherein the trough surfaces (t₁) have minimum possible straight measured distances (a₂) from one another of 60.0 µm to 80.0 µm.

12. Pneumatic vehicle tyre according to any of Claims 1 to 11, **characterized in that** the peak-and-trough structure (8), with a height surface region (f₃) extending over the contrast structure cell (7), of a height surface (F₃) which extends parallel to the base level (N_{B}) and lies relative thereto at a height (h₃) of 60% of the maximum height (hₘₐₓ) of the peak structure (8a) determined perpendicularly to the base level (N_{B}), has a one-piece section surface (s₃) which takes up 20% to 30% of the height surface region (f₂).

13. Pneumatic vehicle tyre according to Claims 5, 6 and 12, **characterized in that** the closed-ended troughs (8b) in the height surface region (f₃) each have a trough surface (t₃) which adjoins the one-piece section surface (s₃) and is co-delimited, against the grid-codefining trough (6a) from which the respective closed-ended trough (8b) projects, by a grid parallel line (r₃) resulting from a minimum possible parallel shift of the grid line (r) which runs in the grid-codefining trough (6a) from which the respective closed-ended trough (8b) projects, wherein the trough surfaces (t₃) have minimum possible straight measured distances (a₃) from one another of 40.0 µm to 50.0 µm.

14. Pneumatic vehicle tyre according to any of Claims 1 to 13, **characterized in that** the peak structure (8a) has a maximum height (hₘₐₓ) of 200.0 µm to 400.0 µm determined relative and perpendicular to the base level (N_{B}).

15. Pneumatic vehicle tyre according to any of Claims 1 to 14, **characterized in that** the peak-and-trough structure (8) has at least two, in particular at least three, closed-ended troughs (8a) projecting from the grid-defining troughs (6a).

## Revendications

1. Pneumatique de véhicule comprenant au moins un élément de surface (2) qui est formé sur sa face externe et présente une structure de contraste à crêtes et creux (6) qui est formée vis-à-vis d'un niveau de base (N_{B}) et qui couvre l'aire de surface entière,
- la structure de contraste à crêtes et creux (6) étant formée à partir d'une pluralité de cellules de structure de contraste (7) assemblées en forme de quadrillage et présentant en vue de dessus une configuration concordante, **caractérisé en ce que**
- la structure de contraste à crêtes et creux (6) présente des creux définissant le quadrillage (6a) le long des points de liaison opposés des cellules de structure de contraste (7),
- chacune des cellules de structure de contraste (7) présentant une structure à crêtes et creux irrégulière (8) qui couvre l'aire de surface entière et qui va jusqu'aux creux définissant le quadrillage (6a), laquelle est constituée uniquement d'une seule structure à crêtes ramifiées continue (8a) et de creux terminaux fermés (8b) faisant saillie à partir des creux définissant le quadrillage (6a),
- l'agencement des cellules de structure de contraste (7) et la réalisation des structures de crêtes et de creux irrégulières (8) étant tels que les structures de crêtes et de creux irrégulières (8), en vue de dessus, peuvent être mutuellement converties par mappage de congruence.

2. Pneumatique de véhicule selon la revendication 1, **caractérisé en ce que** la structure à crêtes (8a) présente uniquement des points de croisement (8a₃) au niveau desquels des parties de la structure à crêtes (8a) se rejoignent respectivement à partir de trois directions.

3. Pneumatique de véhicule selon la revendication 2, **caractérisé en ce que** les points de croisement (8a₃) présentent une forme en T ou en Y en vue en plan.

4. Pneumatique de véhicule selon la revendication 2 ou 3, **caractérisé en ce que** la structure à crêtes (8a) présente de trois à sept des points de croisement (8a₃).

5. Pneumatique de véhicule selon l'une quelconque des revendications 1 à 4, **caractérisé en ce que** les cellules de structure de contraste (7) sont respectivement délimitées en vue en plan par un certain nombre de lignes de quadrillage droites (r) ou un certain nombre de parties droites de lignes de quadrillage (r), les lignes de quadrillage (r) ou les parties des lignes de quadrillage (r) s'étendant dans les creux définissant le quadrillage (6a), et les cellules de structure de contraste (7) présentant de préférence respectivement une longueur d'arête (c) de 700,0 µm à 1300,0 µm, en particulier de 800,0 µm à 1200,0 µm, par rapport à une ligne de quadrillage adjacente (r) ou à une partie adjacente d'une ligne de quadrillage (r).

6. Pneumatique de véhicule selon l'une quelconque des revendications 1 à 5, **caractérisé en ce que** les creux terminaux fermés (8b) font saillie respectivement à partir d'un seul creux (6a) définissant conjointement le quadrillage.

7. Pneumatique de véhicule selon l'une quelconque des revendications 1 à 6, **caractérisé en ce que** la structure à crêtes et creux (8) présente, avec une zone de surface en hauteur (f₁) s'étendant sur la cellule de structure de contraste (7) d'une surface en hauteur (F₁) qui s'étend parallèlement au niveau de base (N_{B}) et est située par rapport à celui-ci à une hauteur (h₁) de 20 % de la hauteur maximale (hₘₐₓ) de la structure à crêtes (8a) déterminée perpendiculairement au niveau de base (N_{B}), une section (s₁) d'un seul tenant qui occupe 70 % à 80 % de la zone de surface en hauteur (f₁).

8. Pneumatique de véhicule selon les revendications 5 à 7, **caractérisé en ce que** les creux terminaux fermés (8b) dans la zone de surface en hauteur (f1) présentent respectivement une surface de creux (t1) adjacente à la section (s₁) d'un seul tenant, qui est délimitée conjointement par rapport au creux (6a) qui définit conjointement le quadrillage, d'où part le creux terminal fermé respectif (8b), par une ligne parallèle de quadrillage (r₁) qui résulte du plus petit décalage parallèle possible de cette ligne de quadrillage (r) qui s'étend dans le creux (6a) définissant conjointement le quadrillage d'où part le creux terminal fermé respectif (8b), la taille de la plus grande surface de creux (t₁) étant de 105 % à 170 %, en particulier d'au plus 150 %, de préférence d'au plus 130 % de la taille de la plus petite surface de creux (t₁).

9. Pneumatique de véhicule selon la revendication 8, **caractérisé en ce que** les surfaces de creux (t₁) présentent les unes par rapport aux autres les plus petites distances mesurées en ligne droite possibles (a₁) de 80,0 µm à 100,0 µm.

10. Pneumatique de véhicule selon l'une quelconque des revendications 1 à 9, **caractérisé en ce que** la structure à crêtes et creux (8) présente, avec une zone de surface en hauteur (f₂) s'étendant sur la cellule de structure de contraste (7) d'une surface en hauteur (F₂) qui s'étend parallèlement au niveau de base (N_{B}) et est située par rapport à celui-ci à une hauteur (h₂) de 40 % de la hauteur maximale (hₘₐₓ) de la structure à crêtes (8a) déterminée perpendiculairement au niveau de base (N_{B}), une section (s₂) d'un seul tenant qui occupe 40 % à 60 % de la zone de surface en hauteur (f₂).

11. Pneumatique de véhicule selon les revendications 5, 6 et 10, **caractérisé en ce que** les creux terminaux fermés (8b) dans la zone de surface en hauteur (f₂) présentent respectivement une surface de creux (t₂) adjacente à la section (s₂) d'un seul tenant, qui est délimitée conjointement par rapport au creux (6a) qui définit conjointement le quadrillage, d'où part le creux terminal fermé respectif (8b), par une ligne parallèle de quadrillage (r₂) qui résulte du plus petit décalage parallèle possible de cette ligne de quadrillage (r) qui s'étend dans le creux (6a) définissant conjointement le quadrillage d'où part le creux terminal fermé respectif (8b), les surfaces de creux (t₁) présentant les unes par rapport aux autres les plus petites distances mesurées en ligne droite possibles (a₂) de 60,0 µm à 80,0 µm.

12. Pneumatique de véhicule selon l'une quelconque des revendications 1 à 11, **caractérisé en ce que** la structure à crêtes et creux (8) présente, avec une zone de surface en hauteur (f₃) s'étendant sur la cellule de structure de contraste (7) d'une surface en hauteur (F₃) qui s'étend parallèlement au niveau de base (N_{B}) et est située par rapport à celui-ci à une hauteur (h₃) de 60 % de la hauteur maximale (hₘₐₓ) de la structure à crêtes (8a) déterminée perpendiculairement au niveau de base (N_{B}), une section (s₃) d'un seul tenant qui occupe 20 % à 30 % de la zone de surface en hauteur (f₂).

13. Pneumatique de véhicule selon les revendications 5, 6 et 12, **caractérisé en ce que** les creux terminaux fermés (8b) dans la zone de surface en hauteur (f₃) présentent respectivement une surface de creux (t₃) adjacente à la section (s₃) d'un seul tenant, qui est délimitée conjointement par rapport au creux (6a) qui définit conjointement le quadrillage, d'où part le creux terminal fermé respectif (8b), par une ligne parallèle de quadrillage (r₃) qui résulte du plus petit décalage parallèle possible de cette ligne de quadrillage (r) qui s'étend dans le creux (6a) définissant conjointement le quadrillage d'où part le creux terminal fermé respectif (8b), les surfaces de creux (t₃) présentant les unes par rapport aux autres les plus petites distances mesurées en ligne droite possibles (a₃) de 40,0 µm à 50,0 µm.

14. Pneumatique de véhicule selon l'une quelconque des revendications 1 à 13, **caractérisé en ce que** la structure à crêtes (8a) présente une hauteur maximale (hₘₐₓ) de 200,0 µm à 400,0 µm, déterminée par rapport et perpendiculairement au niveau de base (N_{B}).

15. Pneumatique de véhicule selon l'une quelconque des revendications 1 à 14, **caractérisé en ce que** la structure à crêtes et creux (8) présente au moins deux, en particulier au moins trois, creux terminaux fermés (8b) faisant saillie à partir des creux (6a) définissant le quadrillage.
